**Europäisches Patentamt**

**European Patent Office**

**Office européen des brevets**

(19)

(11) Numéro de publication : **0 445 550 B1**

(12)

# FASCICULE DE BREVET EUROPEEN

(45) Date de publication du fascicule du brevet :
**14.04.93 Bulletin 93/15**

(51) Int. Cl.⁵ : **A23L 1/16**

(21) Numéro de dépôt : **91101900.8**

(22) Date de dépôt : **11.02.91**

(54) **Procédé de préparation de pâtes alimentaires séchées.**

(30) Priorité : **05.03.90 CH 689/90**

(43) Date de publication de la demande :
**11.09.91 Bulletin 91/37**

(45) Mention de la délivrance du brevet :
**14.04.93 Bulletin 93/15**

(84) Etats contractants désignés :
**AT BE CH DE DK ES FR GB GR IT LI LU NL SE**

(56) Documents cités :
**EP-A- 0 040 361**
**EP-A- 0 309 413**
**CH-A- 317 991**

(56) Documents cités :
**CH-A- 492 402**
**FR-A- 2 474 831**
**FR-A- 2 525 439**
**US-A- 4 370 352**

(73) Titulaire : **SOCIETE DES PRODUITS NESTLE S.A.**
**Case postale 353**
**CH-1800 Vevey (CH)**

(72) Inventeur : **Hauser, Thomas Wilhelm**
**Pflugstrasse 4**
**CH-8006 Zurich (CH)**
Inventeur : **Lechthaler, Jürg**
**Winterthurerstrasse 402**
**CH-8051 Zurich (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a trait à un procédé de préparation de pâtes alimentaires séchées telles que, par exemple, des pâtes à cuisson rapide ou des pâtes instantanées.

Divers procédés ont été décrits pour préparer des pâtes alimentaires possédant un temps de cuisson réduit, par exemple de quelques minutes dans un four microondes, ou des pâtes qui peuvent être reconstituées rapidement pour la consommation, par exemple par immersion dans de l'eau ou un bouillon chauds.

Un procédé connu, décrit dans FR-A-2474831, consiste à extruder les pâtes, à les gélatiniser par cuisson à la vapeur sous pression, puis à les sécher à l'air chaud. Un autre procédé consiste à extruder les pâtes selon la forme désirée, à les précuire dans de l'eau bouillante pendant quelques minutes puis à les égoutter et à les sécher. Toutefois, on a constaté que des pertes de matière importantes pouvaient se produire lors de l'étape de précuisson dans l'eau bouillante.

La présente invention a pour but de pallier cet inconvénient et propose un procédé permettant de préparer des pâtes alimentaires séchées tout en réduisant les pertes de matière première.

Selon le procédé de préparation de pâtes séchées, objet de la présente invention, on prépare un mélange d'eau et d'une mouture de céréale, on forme les pâtes, on prétraité thermiquement les pâtes formées, on précuit les pâtes prétraitées à l'eau bouillante et on sèche les pâtes précuites.

On a constaté que, de manière surprenante, le prétraitement thermique peut permettre de réduire de manière notable les pertes de matière première se produisant lors de l'étape de précuisson des pâtes.

Un autre avantage de ce procédé est de permettre l'obtention de pâtes séchées possédant une qualité et une texture améliorées.

Pour mettre en oeuvre le présent procédé, on peut préparer un mélange comprenant un produit de mouture de céréale et de l'eau.

On peut utiliser, par exemple, de la farine et/ou de la semoule, obtenues par mouture de grains de céréales telles que le blé dur, le blé tendre, le riz ou le maïs. On peut ajouter au mélange des additifs tels que des oeufs frais ou déshydratés, du sel, des épices, des aromates ou des émulsifiants.

On peut ajouter de l'eau en quantité suffisante afin d'obtenir un mélange présentant un taux de matière sèche de l'ordre de 60-75% en poids.

On peut ensuite former les pâtes, par exemple par extrusion du mélange dans une extrudeuse à vis ou une extrudeuse à barre rotative, ou par laminage, suivi d'un découpage afin de conférer aux pâtes la forme et les dimensions souhaitées.

Les pâtes ainsi formées peuvent alors être prétraitées thermiquement.

Le prétraitement peut être effectué, par exemple par chauffage des pâtes à 80-200°C, pendant 5-150 secondes, à l'aide d'un courant d'air chaud pouvant souffler à 15-30 ms$^{-1}$.

Le prétraitement peut également être effectué par application d'énergie micro-ondes, par exemple à une puissance de 400-1300 W, pendant 50-500 secondes. Le prétraitement peut aussi être effectué à l'aide d'un courant de vapeur, ou d'un rayonnement infrarouge. Les conditions de durée, de température, de puissance notamment, dans lesquelles est réalisé le prétraitement, peuvent être choisies par l'homme du métier en fonction, entre autre, de la forme et de la taille des pâtes à prétraiter, et de l'importance de l'écart existant entre la température des pâtes sortant de l'extrudeuse ou du laminoir et la température de l'eau de précuisson.

On a donc observé que des pertes importantes de matière première pouvaient se produire lors de l'étape de précuisson. Or, il est possible que ces pertes soient dues à un écart trop important entre la température des pâtes sortant de l'extrudeuse ou du laminoir et la température de l'eau de précuisson.

En effet, les pâtes sortant d'une extrudeuse ou d'un laminoir peuvent être à une température, par exemple 30-45°C, inférieure à celle de l'eau servant pour la précuisson, par exemple 97-100°C.

Lorsque lesdites pâtes sont introduites dans l'eau de précuisson, la chaleur fournie par cette eau peut servir tout d'abord à chauffer les pâtes jusqu'à une température adéquate pour la précuisson, par exemple 97-100°C, puis seulement ensuite à les précuire.

Il en résulte que la précuisson ne débute pas immédiatement après l'introduction des pâtes dans l'eau de précuisson.

Or, on a observé que des pertes de matière, pouvant atteindre jusqu'à 9-15% en poids, pouvaient se produire lorsque la précuisson est effectuée à une température inférieure à 97-100°C et/ou lorsque la précuisson ne débute pas immédiatement après l'introduction des pâtes dans l'eau de précuisson.

On a constaté qu'une précuisson débutant immédiatement à au moins 97°C peut permettre de stabiliser la structure des pâtes, par dénaturation des protéines présentes a leur surface, et d'obtenir des pâtes de bonne qualité, présentant une structure et une texture améliorée, tout en réduisant les pertes de matière première.

Le présent prétraitement thermique peut donc permettre de réduire, voire d'éliminer, l'écart existant entre la température des pâtes sortant de l'extrudeuse ou du laminoir et celle de l'eau de précuisson, et permettre ainsi une précuisson débutant rapidement, voire immédiatement, à une température au moins égale à 97°C.

Les pâtes ainsi prétraitées peuvent ensuite être précuites, dans de l'eau bouillante.

On peut, notamment, précuire les pâtes pendant 1 à 5 minutes, dans de l'eau légèrement acidifiée, présentant un pH de 5-6 et à une température de 97-100°C.

Les pâtes précuites peuvent alors être séchées, par exemple dans un séchoir à air chaud à 80-90°C, par rayonnement, infrarouge ou par microondes, pendant environ 1-8 heures, de manière à obtenir des pâtes séchées présentant un taux de matière sèche de 92-98% en poids.

Le présent procédé de préparation de pâtes alimentaires séchées peut être mis en oeuvre en discontinu, en semi-continu ou, de préférence, en continu.

Pour mettre en oeuvre le présent procédé en continu, on peut disposer les pâtes, à leur sortie de l'extrudeuse ou du laminoir, sur une bande transporteuse, en une couche de quelques centimètres d'épaisseur, par exemple. On peut faire passer la bande recouverte de pâtes dans un tunnel de chauffage, notamment un tunnel à air chaud, dans lequel, par exemple, de l'air chaud à 80-200°C arrive par le dessus de la bande, traverse verticalement de haut en bas la bande et les pâtes, et est récupéré par un ventilateur situé sous la bande. On peut ensuite précuire et sécher en continu les pâtes ainsi prétraitées.

La présente invention est illustrée plus en détail dans les exemples qui suivent.

Exemple 1

On prépare un mélange comprenant 15 parties en poids de semoule de blé dur et 4,7 parties en poids d'eau.

On extrude le mélange dans une extrudeuse à vis, puis on le découpe de manière à obtenir des pâtes de type cornettes présentant un diamètre de environ 5 mm et une épaisseur de paroi de environ 1,5 mm.

Pour prétraiter thermiquement les pâtes, on les dispose sur une bande transporteuse, on une couche de environ 2-4 cm. On fait passer la bande à une vitesse de environ 0,1-0,2 ms$^{-1}$ dans un tunnel à air chaud de 90 cm de long et 20 cm de large du type décrit ci-dessus. On obtient ainsi 40 à 130 kg de pâtes prétraitées par heure.

On varie les conditions de température du prétraitement, ainsi que la vitesse à laquelle l'air chaud traverse de haut en bas la couche de pâtes comme indiqué dans le tableau ci-après.

On précuit ensuite les pâtes dans de l'eau bouillante à 98-100°C à pH 5,5 pendant 3 minutes.

On égoutte les pâtes précuites puis on les sèche, pendant environ 5 heures à 85°C, jusqu'à obtention d'un taux de matière sèche de 96% en poids.

On prélève des échantillons de pâtes correspondant à diverses conditions de prétraitement.

On mesure, en % en poids, les pertes de matière première qui se produisent lors de l'étape de précuisson.

On obtient les résultats présentés dans le tableau ci-après qui indique aussi, pour comparaison, les pertes de matière première à la précuisson d'un échantillon témoin préparé de la même manière mais sans prétraitement thermique, ainsi que la différence entre les pertes mesurées sur l'échantillon témoin et celles mesurées sur les échantillons de pâtes qui ont subi un prétraitement thermique.

| Echantillon | prétraitement thermique | | | pertes | différence |
|---|---|---|---|---|---|
| | durée (s) | température (°C) | vitesse de l'air(m/s) | (%) | (%) |
| Témoin | -- | -- | -- | 10,03 | -- |
| A | 9,4 | 190 | 20 | 8,25 | 17,8 |
| B | 7,6 | 190 | 25 | 7,80 | 22,3 |
| C | 17,3 | 130 | 25 | 6,88 | 31,4 |
| D | 30,0 | 135 | 29 | 6,47 | 35,5 |
| E | 35,0 | 148 | 21 | 6,47 | 35,5 |

On constate donc que le prétraitement thermique permet de réduire les pertes de matière première d'au moins 17,8%, cette économie pouvant atteindre 35,5% pour une durée de prétraitement plus longue.

On remarque aussi qu'un prétraitement relativement long effectué à une température relativement peu élevée (30 -35 secondes, 135-148°C) permet d'obtenir les meilleurs résultats.

Exemple 2

On prépare un mélange comprenant 80 parties en poids de semoule de blé dur, 10 parties en poids d'oeufs entiers pasteurisés et 1 partie en poids d'émulsifiant, et on y ajoute de l'eau de manière à obtenir un taux de matière sèche d'environ 69% en poids.

On extrude le mélange dans une extrudeuse à vis, puis on le découpe de manière à obtenir des pâtes de type cornettes présentant un diamètre de environ 5 mm, une longueur de environ 70 mm et une épaisseur de paroi de environ 0,9 mm.

Pour prétraiter thermiquement les pâtes, on les dispose sur une bande transporteuse, en une couche de environ 2-4 cm.

On fait passer la bande à une vitesse de environ 0,1-0,2 ms$^{-1}$ dans un tunnel micro-ondes, équipé d'un magnétron dont la puissance peut varier entre 0 et 3 kW.

On choisit la puissance et la durée du prétraitement de manière à ne pas détériorer l'aspect visuel des pâtes (par apparition de bulles en surface), tout en assurant un prétraitement thermique optimum.

Les pâtes prétraitées sont ensuite précuites dans de l'eau bouillante à 98-100°C à pH 5,5 pendant 2 1/2 minutes.

On égoutte les pâtes précuites puis on les sèche, pendant environ 5 heures à 85°C, jusqu'à obtention d'un taux de matière sèche de 96% en poids.

On prélève des échantillons de pâtes correspondant à différentes conditions de prétraitement.

On mesure, en % en poids, les pertes de matière première qui se produisent lors de l'étape de précuisson.

On obtient les résultats présentés dans le tableau ci-après qui indique aussi, pour comparaison, les pertes de matière première à la précuisson d'un échantillon témoin préparé de la même manière mais sans prétraitement thermique, ainsi que la différence entre les pertes mesurées sur l'échantillon témoin et celles mesurées sur les échantillons de pâtes qui ont subi un prétraitement thermique.

| Echantillon | prétraitement thermique | | pertes | différence |
|---|---|---|---|---|
| | durée (s) | puissance (W) | % | % |
| Témoin | -- | -- | 9,50 | -- |
| A | 71 | 1'300 | 8,17 | 14 |
| B | 150 | 1'300 | 7,65 | 19,5 |
| C | 262 | 400 | 8,55 | 10 |

Le prétraitement thermique par micro-ondes permet donc bien de réduire les pertes de matière première. De plus, des analyses de texture effectuées sur les échantillons ainsi préparés indiquent:
- que les échantillons A et B, et dans une moindre mesure l'échantillon C, présentent une texture plus ferme que celle du témoin,
- que les échantillons A,B et C présentent une texture beaucoup moins collante que celle du témoin.

Le présent prétraitement permet donc également d'améliorer la texture des pâtes obtenues.

Le prétraitement par micro-ondes permet la coagulation en masse et une fixation rapide du gluten.

Ceci peut alors permettre l'utilisation d'une mouture de céréale pauvre en gluten (teneur de 11% environ, par exemple) telle quelle, sans nécessité d'y ajouter un liant.

**Revendications**

1. Procédé de préparation de pâtes alimentaires séchées, dans lequel on prépare un mélange d'eau et d'une mouture de céréale, on forme les pâtes, on précuit les pâtes prétraitées à l'eau bouillante et on sèche les pâtes précuites, caractérisé par le fait que l'on prétraite thermiquement les pâtes formées, avant de les précuire.

2. Procédé selon la revendication 1, caractérisé par le fait que les pâtes formées sont prétraitées thermiquement pendant 5-150 secondes, à 80-200°C.

3. Procédé selon la revendication 2, caractérisé par le fait que le prétraitement est effectué à l'aide d'un courant d'air chaud soufflant à 15-30 ms⁻¹.

4. Procédé selon la revendication 1, caractérisé par le fait que le prétraitement est effectué à l'aide d'énergie microonde, à une puissance de 400-1300W, pendant 50-500 secondes.

5. Procédé selon la revendication 1, caractérisé par le fait que le prétraitement est effectué à l'aide d'un courant de vapeur, ou d'un rayonnement infrarouge.

6. Procédé selon la revendication 1, caractérisé par le fait que les pâtes prétraitées sont précuites pendant 1 à 5 minutes dans de l'eau bouillante à 97-100°C et présentant un pH de 5-6.

7. Procédé selon la revendication 1, caractérisé par le fait que les pâtes précuites sont séchées jusqu'à obtention d'un taux de matière sèche de 92-98% en poids par rayonnement infrarouge ou microondes, ou par passage dans un séchoir à air chaud à 80-90°C.


## Claims

1. A process for the preparation of dried pasta in which a mixture of water and a ground cereal is prepared, the pasta is shaped, the shaped pasta is thermally pretreated, the pretreated pasta is precooked and the precooked pasta is dried, characterized in that the shaped pasta is thermally pretreated before cooking.

2. A process as claimed in claim 1, characterized in that the shaped pasta is thermally pretreated for 5 to 150 seconds at 80 to 200°C.

3. A process as claimed in claim 2, characterized in that the pretreatment is carried out with a stream of hot air flowing at 15 to 30 ms⁻¹.

4. A process as claimed in claim 1, characterized in that the pretreatment is carried out with microwave energy at an output of 400 to 1,300 W over a period of 50 to 500 seconds.

5. A process as claimed in claim 1, characterized in that the pretreatment is carried out with a stream of steam or with infrared radiation.

6. A process as claimed in claim 1, characterized in that the pretreated pasta is precooked for 1 to 5 minutes in boiling water at 97 to 100°C having a pH of 5 - 6.

7. A process as claimed in claim 1, characterized in that the precooked pasta is dried to a dry matter content of 92 to 98% by weight by infrared or microwave radiation or by passage through a hot-air dryer at 80 to 90°C.


## Patentansprüche

1. Verfahren zur Herstellung von getrockneten Teigwaren, bei welchem man ein Gemisch von Wasser und einem Getreidemahlgut herstellt, die Teigwaren formt, die vorbehandelten Teigwaren in kochendem Wasser vorkocht und die vorgekochten Teigwaren trocknet, dadurch gekennzeichnet, daß die geformten Teigwaren wärmevorbehandelt werden, bevor sie vorgekocht werden.

2. Verfahren nach Anspruch 1, dadurch gekennzeichnet, daß die geformten Teigwaren 5 bis 150 Sekunden lang bei 80 bis 200°C wärmevorbehandelt werden.

3. Verfahren nach Ansprch 2, dadurch gekennzeichnet, daß die Vorbehandlung mit Hilfe eines Heißluftstroms mit einer Strömungsgeschwindigkeit von 15 bis 30 ms$^{-1}$ durchgeführt wird.

4. Verfahren nach Anspruch 1, dadurch gekennzeichnet, daß die Vorbehandlung 50 bis 500 Sekunden lang mit Hilfe von Mikrowellenenergie mit einer Leistung von 400 bis 1300 W durchgeführt wird.

5. Verfahren nach Anspruch 1, dadurch gekennzeichnet, daß die Vorbehandlung mit Hilfe eines Dampfstroms oder mit Hilfe von Infrarotstrahlen durchgeführt wird.

6. Verfahren nach Anspruch 1, dadurch gekennzeichnet, daß die vorbehandelten Teigwaren 1 bis 5 Minuten lang in kochendem Wasser mit einer Temperatur von 97 bis 100°C und einem pH-Wert von 5 bis 6 vorgekocht werden.

7. Verfahren nach Anspruch 1, dadurch gekennzeichnet, daß die vorgekochten Teigwaren durch Infrarotstrahlen oder Mikrowellen oder durch Durchgang durch einen Heißlufttrockner von 80 bis 90°C getrocknet werden, bis man einen Trockensubstanzgehalt von 92 bis 98 Gewichtsprozent erhält.